# EUROPÄISCHE PATENTSCHRIFT

(11) **EP 2 639 472 B1**
(45) Veröffentlichungstag und Bekanntmachung des Hinweises auf die Patenterteilung: **17.09.2014**
(21) Anmeldenummer: 13154862.0
(22) Anmeldetag: 12.02.2013
(51) Int. Cl.: F16D 65/12

(54) **Verschleißblech für eine Bremsscheibe**
Wear plate for a brake disc
Tôle d'usure pour un disque de frein

(30) Priorität: 12.03.2012 DE 102012102064
(43) Veröffentlichungstag der Anmeldung: 18.09.2013
(73) Patentinhaber: PE Automotive GmbH & Co. KG, 58256 Ennepetal (DE)
(72) Erfinder: Richter, Frank, 58313 Herdecke (DE); Weise, Bernd, 45527 Hattingen (DE)
(74) Vertreter: Schweiger, Johannes

(56) Entgegenhaltungen:
- EP-A1- 2 543 905
- WO-A1-2008/026990
- US-A1- 2004 178 030
- US-A1- 2010 084 911

## Beschreibung

Die vorliegende Erfindung betrifft ein System aus einem Verschleißblech zur Anbringung zwischen Abstützflächen einer Bremsscheibe und einer die Bremsscheibe aufnehmenden Bremsnabe sowie einer korrespondierenden Bremsscheibe zur Aufnahme einer Nocken aufweisenden Bremsnabe gemäß Patentanspruch 1.

Eine gattungsbildende Bremsscheibe mit zugehöriger Achsnabe ist in der EP 1 108 155 B1 beschrieben. Nähere Einzelheiten und Funktionen einer gattungsgemäßen Bremsscheiben-/Nabenverbindung für solche Fahrzeugscheibenbremsen ergeben sich aus der DE 10046705 C1 sowie der US 2010/084911 A1, der WO 2008/026990 A1 und der US 2004/178030 A1. Die Bremsscheibe wird üblicherweise axial auf die Bremsscheibennabe, die häufig auch eine Radnabe des Fahrzeugs ist, aufgeschoben und gesichert. Die Nabe ist hierzu an ihrer äußeren Umfangsfläche mit einer zahnförmigen Außenkontur versehen, in die eine korrespondierende Innenkontur der Bremsscheibe formschlüssig eingreift, so dass eine wechselseitige Verdrehung der Bremsscheibe und Nabe in Rotationsrichtung der Fahrzeugscheibenbremse verhindert wird, mithin die Bremsscheibe gegenüber der Nabe keinen Freiheitsgrad aufweist. Somit wird das Bremsmoment von der Bremsscheibe auf die Nabe übertragen.

Aufgabe der vorliegenden Erfindung ist es, die Standzeiten von gattungsgemäßen Bremsscheiben-/Nabenverbindungen für Fahrzeugscheibenbremsen und somit die Zuverlässigkeit der Fahrzeugscheibenbremse insgesamt zu verbessern.

Diese Aufgabe wird durch ein System gemäß Patentanspruch 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen. Soweit Wertebereiche angegeben sind, sollen auch innerhalb der genannten Grenzwerte liegende Werte als mitoffenbart gelten.

Der Erfindung liegt der Gedanke zugrunde, ein einfach gestaltetes, insbesondere einteiliges, Verschleißblech zur Anbringung zwischen Abstützflächen einer Bremsscheibe und einer die Bremsscheibe aufnehmenden Bremsnabe vorzusehen. Erfindungsgemäße Verschleißbleche sind, insbesondere im Vergleich zu Federeinrichtungen gemäß DE 100 46 705 C1 konstruktiv einfacher ausgebildet und somit äußerst kostengünstig herstellbar. Auch die Montage der erfindungsgemäßen Verschleißbleche erfordert deutlich weniger Schritte. Besonders vorteilhaft ist es, wenn das Verschleißblech erfindungsgemäß durch einen Stanz- und/oder Biegeprozess herstellbar ist.

Das erfindungsgemäße Verschleißblech weist zwei gegenüberliegend angeordnete Verschleißschenkel auf, die durch Kontakt mit der korrespondierenden Abstützfläche der Bremsscheibe einerseits und der Bremsnabe beziehungsweise einer korrespondierenden Abstützfläche der Bremsnabe andererseits mechanisch verschleißen, insbesondere durch Oberflächenabtrag. Dabei weist das Verschleißblech eine geringere Verschleißfestigkeit als die korrespondierenden Abstützflächen der Bremsscheibe und/oder der Bremsnabe auf, so dass der Verschleiß zumindest überwiegend, insbesondere praktisch ausschließlich an dem Verschleißblech und nicht an den korrespondierenden Abstützflächen der Bremsscheibe und/oder der Bremsnabe erfolgt.

Zwischen den beiden gegenüberliegend angeordneten Verschleißschenkeln verläuft ein Zwischenschenkel, so dass sich erfindungsgemäß insbesondere ein U-Profil aus den beiden Verschleißschenkeln und dem Zwischenschenkel ergibt. Durch die Verbindung über den Zwischenschenkel können die beiden Verschleißschenkel aus einem einzigen Verschleißblech ausgebildet werden sowie weitere Funktionen gemäß nachfolgend aufgeführten Merkmalen übernehmen.

Gemäß der Erfindung ist es vorgesehen, dass der Zwischenschenkel an der Bremsscheibe und/oder der Bremsnabe fixierbar ausgebildet ist, insbesondere durch eine den Zwischenschenkel durchsetzende Fixieröffnung. Auf diese Weise wird ein Verrutschen, insbesondere durch Vibrationen beim Betrieb oder Krafteinbringung beim Bremsen, vermieden, so dass eine dauerhafte Funktion des Verschleißblechs beim Betrieb der Fahrzeugscheibenbremse sichergestellt ist.

Soweit die Verschleißschenkel als, insbesondere gefalztes, Doppelprofil ausgebildet sind, ist das Verschleißblech an den Verschleißschenkeln dicker als am Zwischenschenkel, so dass mehr Verschleißmaterial zum Verschleiß vorhanden ist.

In Weiterbildung der Erfindung ist es mit Vorteil vorgesehen, dass das Verschleißblech auf Nocken der Bremsnabe oder an gegenüberliegenden Abstützflächen der Bremse klemmbar ausgebildet ist. Dies erfolgt insbesondere durch Verformung des Verschleißblechs, vorzugsweise entgegen einer Vorspannung des Verschleißblechs. Durch diese erfindungsgemäße Maßnahme wird die Montage des Verschleißblechs vereinfacht.

Weitere Vorteile, Merkmale und Einzelheiten der Erfindung ergeben sich aus der nachfolgenden Beschreibung bevorzugter Ausführungsbeispiele sowie anhand der Zeichnung.

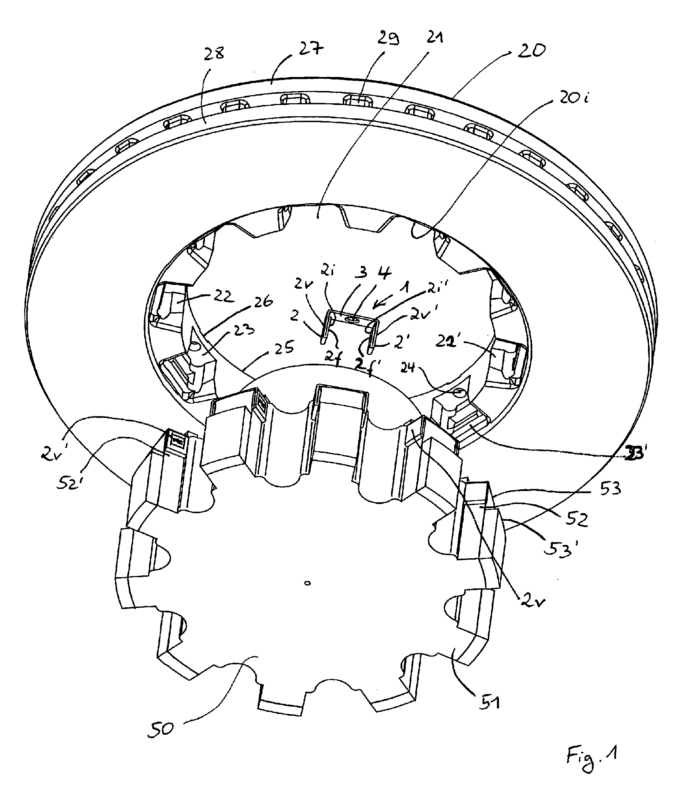

Diese zeigt in Figur 1 eine perspektivische Ansicht einer erfindungsgemäßen Bremsscheiben-/Nabenverbindung für Fahrzeugscheibenbremsen mit erfindungsgemäßen Verschleißblechen sowie einer erfindungsgemäßen Bremsscheibe.

Die Figur 1 zeigt eine Bremsscheiben-/Nabenverbindungsanordnung für Fahrzeugscheibenbremsen mit einer, insbesondere innen belüfteten, Bremsscheibe 20, die auf eine Bremsnabe 50 axial aufschiebbar ist. Die Bremsscheibe 20 weist zwei Reibringe 27, 28 mit zwischen den Reibringen 27, 28 verlaufenden Lüftungskanälen 29 auf. An einem Innenumfang 20i weist die Bremsscheibe 20 mehrere, gleichmäßig am Innenumfang 20i verteilte Nockenaufnahmen 21 auf, in die Nocken 51 der Bremsnabe 50 aufnehmbar sind. Die Nockenaufnahmen 21 sind U-förmig korrespondierend zu den Nocken 51 ausgebildet, wobei seitliche Abstützflächen 22, 22' der Nockenaufnahmen 21 beim Betrieb der Fahrzeugscheibenbremse mit korrespondierenden Abstützflächen 52, 52' der Nocken 51 zusammenwirken, indem diese sich in Rotationsrichtung beim Bremsen aneinander abstützen, so dass die Bremskraft von der Bremsscheibe 20 auf die Bremsnabe 50 übertragen wird. In Axialrichtung der Bremsnabe 50 stützt sich die Bremsscheibe 20 mit Auflageflächen 23 und/oder Auflageflächen 23' der Nockenaufnahmen 21 an korrespondierenden Auflageflächen 53 und/oder Auflageflächen 53' der Nocken 51 ab.

Erfindungsgemäß sind zwischen den Nocken 51 und die jeweils korrespondierenden Nockenaufnahmen 21 Verschleißbleche 1 einsetzbar, insbesondere ausschließlich im Bereich der Abstützflächen 22, 22', 52, 52' sowie der Auflageflächen 23, 23', 53, 53`. Die Auflageflächen 23, 23', 53, 53' sind vorzugsweise stufenförmig ausgebildet, wobei die Stufen verschiedene Funktionen aufweisen können; insbesondere kann für die Auflage der Verschleißbleche 1 eine andere Stufe vorgesehen sein wie für die Auflage der Nocken 51, wobei auch die Nocken 51, insbesondere korrespondierende, Stufen aufweisen können.

Die Verschleißbleche 1 sind jeweils als U-Profile gefalzt, wobei an einen Zwischenschenkel 3 (Boden des U-Profils) jeweils seitlich gegenüberliegend Verschleißschenkel 2, 2' im Wesentlichen orthogonal zu dem Zwischenschenkel 3 verlaufend anschließen (Schenkel des U-Profils).

Der Zwischenschenkel 3 weist eine den Zwischenschenkel 3 durchsetzende Fixieröffnung 4 zur Fixierung der Verschleißbleche 1 mit der Bremsscheibe 20 und der Bremsnabe 50 auf. Hierzu sind an der Bremsscheibe 20 die Auflageflächen 23 durchsetzende Fixieröffnungen 24 vorgesehen, und zwar an jeweils den Fixieröffnungen 4 korrespondierenden Positionen. Durch nicht dargestellte Fixiermittel, insbesondere Schrauben, die sich an einer Fixierseite 25 der Bremsscheibe 20 abstützen und in Vertiefungen 26 eingelassen sind, um eine Funktion des Reibrings 27 nicht zu beeinträchtigen, werden die Verschleißbleche 1 an der Bremsscheibe 20 fixiert. Es ist erfindungsgemäß denkbar, mit den Fixiermitteln gleichzeitig auch die Bremsnabe 50 zu fixieren, insbesondere durch Verschraubung.

Die Verschleißschenkel 2 stützen sich jeweils mit einer äußeren Verschleißfläche 2v an der Abstützfläche 22 und mit einer inneren Verschleißfläche 2i an der Abstützfläche 52 ab. Das Gleiche gilt korrespondierend für den gegenüberliegenden Verschleißschenkel 2', der sich mit seiner äußeren Verschleißfläche 2v' an der Abstützfläche 22' und mit seiner inneren Verschleißfläche 2i' an der Abstützfläche 52' abstützt. Beim Betrieb der Bremsscheiben-/Nabenverbindungsanordnung beziehungsweise der Fahrzeugscheibenbremse tritt an den inneren und äußeren Verschleißflächen 2v, 2v', 2i, 2i' der überwiegende Verschleiß auf. Hierzu ist es erfindungsgemäß insbesondere vorgesehen, dass die Verschleißschenkel 2, 2' jeweils einen, insbesondere nach innen gefalzten, Falzabschnitt 2f, 2f' aufweisen, so dass die Verschleißschenkel 2, 2' doppelt so dick wie der Zwischenschenkel 3 ausgebildet sind (Doppelprofil). Die Falzabschnitte 2f, 2f' bilden somit auch die inneren Verschleißflächen 2i, 2i' aus.

Die Montage der erfindungsgemäßen Bremsscheiben-/Nabenverbindungsanordnung ist denkbar einfach:
- Aufclipsen der Verschleißbleche 1 auf die korrespondierenden Nocken 51, so dass die Verschleißbleche 1 die Abstützflächen 52, 52' und die Auflageflächen 53 bedecken,
- Aufsetzen der Nockenaufnahmen 21 der Bremsscheibe 20 auf die korrespondierenden, auf den Nocken 51 aufgeclipsten Verschleißbleche 1.

Zum Aufclipsen werden die Verschleißbleche 1 entgegen deren Vorspannung verformt.

### Bezugszeichenliste

- 1: Verschleißbleche
- 2, 2': Verschleißschenkel
- 2i, 2i': innere Verschleißflächen
- 2v, 2v': äußere Verschleißflächen
- 2f, 2f': Falzabschnitt
- 3: Zwischenschenkel
- 4: Fixieröffnung
- 20: Bremsscheibe
- 20i: Innenumfang
- 21: Nockenaufnahmen
- 22, 22': Abstützflächen
- 23, 23': Auflageflächen
- 24: Fixieröffnungen
- 25: Fixierseiten
- 26: Vertiefungen
- 27: Reibringe
- 28: Reibringe
- 29: Lüftungskanäle
- 50: Bremsnabe
- 51: Nocken
- 52, 52': Abstützflächen
- 53, 53': Auflageflächen

## Patentansprüche

1. System aus
a) mindestens einem Verschleißblech (1) zur Anbringung zwischen einer Bremsscheibe (20) und einer die Bremsscheibe (20) aufnehmenden Bremsnabe (50) mit folgenden Merkmalen:
- zwei gegenüberliegend angeordnete Verschleißschenkel (2, 2'),
- ein zwischen den Verschleißschenkeln (2, 2') verlaufender Zwischenschenkel (3) mit einer den Zwischenschenkel (3) durchsetzenden Fixieröffnung (4) zur Fixierung des Verschleißbleches (1) mit der Bremsscheibe (20) und der Bremsnabe (50),
wobei das Verschleißblech (1) auf Nocken (52) der Bremsnabe (50) aufsetzbar ausgebildet ist und
b) die Bremsscheibe zur Aufnahme auf einer Nocken (51) aufweisenden Bremsnabe (50)
- je eine in und entgegen einer Rotationsrichtung der Bremsnabe (51) weisende Abstützfläche (22, 22') zur Abstützung an den Nocken (51) aufweist,
**dadurch gekennzeichnet, dass** die Bremsscheibe jeweils zwischen den Abstützflächen (22, 22') verlaufende Auflageflächen (23) mit die Auflageflächen (23) durchsetzenden Fixieröffnungen (24) aufweist, dass das Verschleißblech (1) zwischen je zwei gegenüberliegenden Abstützflächen ((22, 22') sowie der jeweils zugehörigen Auflagefläche (23) und der zugehörigen Nocke (51) anbringbar ist, und dass die Verschleißbleche (1) mittels Schrauben, die sich an einer zur Auflagefläche (23) abgewandten Fixierseite (25) der Bremsscheibe (20) abstützen und in Vertiefungen (26) eingelassen sind, an der Bremsscheibe (20) fixierbar sind.

2. System nach Anspruch 1, bei dem das Verschleißblech (1) als U-Profil ausgebildet ist.

3. System nach einem der vorhergehenden Ansprüche, bei dem die Verschleißschenkel (2, 2') als, insbesondere gefalztes, Doppelprofil ausgebildet sind.

4. System nach einem der vorhergehenden Ansprüche, bei dem das Verschleißblech (1) auf Nocken (51) der Bremsnabe (50) oder an gegenüberliegenden Abstützflächen (22, 22') der Bremsscheibe (20) klemmbar ausgebildet ist, insbesondere durch Verformung des Verschleißblechs (1), vorzugsweise entgegen einer Vorspannung des Verschleißblechs (1).

## Claims

1. A system consisting of
a) at least one wear plate (1) for attachment between a brake disc (20) and a brake hub (50) that holds the brake disc (20), having the following features:
- two mutually opposite wear arms (2, 2'),
- an intermediate arm (3) that runs between the wear arms (2, 2') and has a fixing opening (4) that runs through the intermediate arm (3) for fixing the wear plate (1) to the brake disc (20) and the brake hub (50),
wherein the wear plate (1) is formed such that it can be placed onto cams (52) of the brake hub (50), and
b) the brake disc has, in order to be held on a brake hub (50) having cams (51),
- supporting faces (22, 22'), one facing in the rotation direction of the brake hub (51) and one facing counter to the same, for supporting on the cams (51),
**characterised in that** the brake disc has bearing faces (23) that each run between the supporting faces (22, 22') and have fixing openings (24) that run through the bearing faces (23),
the wear plate (1) can be attached between in each case two mutually opposite supporting faces (22, 22') and the associated bearing face (23) and the associated cam (51), and
the wear plates (1) can be fixed to the brake disc (20) by means of screw fastenings, which are supported on a fixing side (25) of the brake disc (20) that faces away from the bearing face (23) and are let into depressions (26).

2. The system according to claim 1, in which the wear plate (1) is formed as a U-profile.

3. The system according to any one of the preceding claims, in which the wear arms (2, 2') are formed as an in particular folded double profile.

4. The system according to any one of the preceding claims, in which the wear plate (1) is formed such that it can be clamped onto cams (51) of the brake hub (50) or onto mutually opposite supporting faces (22, 22') of the brake disc (20), in particular by deforming the wear plate (1), preferably counter to a prestress of the wear plate (1).

## Revendications

1. Système composé
a) d'au moins un tôle d'usure (1) pour montage entre un disque de frein (20) et un moyeu de frein (50) recevant le disque de frein (20) avec les caractéristiques suivantes :
- deux branches d'usuxe (2, 2') disposées opposées,
- une branche intermédiaire (3) passant entre les branches d'usure (2, 2') avec un orifice de fixation (4) traversant la branche intermédiaire (3) pour fixer la tôle d'usure (1) avec le disque de frein (20) et le moyeu de frein (50),
pour lequel la tôle d'usure (1) est constituée pouvant être mise en place sur des cames (52) du moyeu de frein (50) et
b) le disque de frein présente pour réception sur un moyeu de frein (50) comportant des cames (51),
- à chaque fois une face d'appui (22, 22') pour appui sur les cames (51) orientée dans et opposée à une direction de rotation du moyeu de frein (51),
**caractérisé en ce que** le disque de frein présente à chaque fois des portées (23) passant entre les faces d'appui (22, 22') avec des trous de fixation (24) traversant les portées (23),
**en ce que** la tôle d'usure (1) peut être montée entre chacune des deux faces d'appui (22, 22') opposées ainsi que la portée (23) respectivement correspondante et la came (51) correspondante, et
**en ce que** les tôles d'usure (1) peuvent être fixées au disque de frein (20) au moyen de vis, qui s'appuient sur un côté de fixation (25) du disque de frein (20) opposé à la surface de support (23) et sont encastrées dans des cavités (26).

2. Système selon la revendication 1, pour lequel la tôle d'usure (1) est constituée comme un profilé en U.

3. Système selon une quelconque des revendications précédentes, pour lequel les branches d'usure (2, 2') sont constituées comme un profilé double, en particulier replié.

4. Système selon une quelconque des revendications précédentes, pour lequel la tôle d'usure (1) est constituée comme pouvant être serrée sur les cames (51) du moyeu de frein (50) ou sur les faces d'appui (22, 22') opposées du disque de frein (20), en particulier par déformation de la tôle d'usure (1), de préférence contre une tension préalable de la tôle d'usure (1).
